# EUROPEAN PATENT SPECIFICATION

(11) **EP 3 672 717 B1**
(45) Date of publication and mention of the grant of the patent: **07.06.2023**
(21) Application number: 18778965.6
(22) Date of filing: 21.08.2018
(51) Int. Cl.: B01F 33/501, B01F 35/32, B01F 35/45, B01F 35/513, B01F 35/71, A47J 43/27, B65D 79/00

(54) **MIXING VESSEL FOR CONSUMABLE SUBSTANCES, METHOD OF USING SAID MIXING VESSEL AND METHOD OF MANUFACTURING SAID MIXING VESSEL**
MISCHBEHÄLTER FÜR VERBRAUCHSSTOFFE, VERFAHREN ZUR VERWENDUNG DES BESAGTEN MISCHBEHÄLTERS UND VERFAHREN ZUR HERSTELLUNG DES BESAGTEN MISCHBEHÄLTERS
RÉCIPIENT DE MÉLANGE POUR SUBSTANCES CONSOMMABLES, PROCÉDÉ D'UTILISATION DUDIT RÉCIPIENT DE MÉLANGE ET PROCÉDÉ DE FABRICATION DUDIT RÉCIPIENT DE MÉLANGE

(30) Priority: 23.08.2017 GB 201713567
(43) Date of publication of application: 01.07.2020
(73) Proprietor: Norwood House Chocolate Limited, Baltonsborough, Somerset BA6 8PN (GB)
(72) Inventor: GARNSWORTHY, Duncan Charles, Baltonsborough Somerset BA6 8PN (GB); GARNSWORTHY, Alasdair George, Baltonsborough Somerset BA6 8PN (GB)
(74) Representative: EIP
(86) International application number: PCT/GB2018/052366
(87) International publication number: WO 2019/038530

(56) References cited:
- EP-A1- 1 468 933
- WO-A1-2007/030533
- WO-A1-2013/166148
- WO-A1-2013/175288
- AU-B2- 2008 246 286
- DE-A1- 3 606 827
- NL-C1- 1 034 875
- US-A- 2 034 739
- US-A- 2 561 596
- US-A- 4 616 761
- US-B1- 6 471 390

## Description

### Technical Field

The present invention relates to a mixing vessel for consumable substances, a method of using a mixing vessel and a method of manufacturing a mixing vessel. The mixing vessel may be used to produce a consumable liquid, such as a hot beverage.

### Background

Many consumable, i.e. potable, liquids involve the mixing of ingredients. For example, hot beverages may require the mixing of a solid consumable substance, such as a powder, with a liquid that is heated above an ambient temperature.

As one example, making "hot chocolate" typically involves heating a liquid, such as milk, and then mixing a cacao-based solid, such as fine chocolate powder or flake, into the liquid. Liquid may be heated in a pan, frothing device or microwave. In one case, the liquid in a continuous form is heated to a melting point of cocoa fats within the chocolate, such as beyond 30 degrees Celsius. The cacao-based solid thus melts on contact with the liquid, and the melted solid is mixed to distribute the insoluble fat content within the liquid. Typically, this is achieved by stirring the liquid, such as with a spoon in a cup or a pan. Whilst this disperses the chocolate through the continuous liquid, a full emulsion is not achieved due to the low levels of shear force enacted by the stirring motion. This often results in a drink which has a "grainy" feel within the mouth due to the presence of large fat droplets, and the rapid settling of the cacao-based solid from carried liquid if left to stand.

As another example, it may be desired to mix powders for soup, tea or coffee with hot water or milk to form a consumable substance.

There are several solutions available for mixing liquids and edible substances. Many of these are designed for mixing alcoholic beverages and a few operate as variations on a "cocktail shaker". Others are designed for adding tablets, such as hydration tablets, to bottles of cold liquid. These solutions are not suitable for certain mixtures, such as those involving hot liquids. Indeed, users are often explicitly informed not to use them for such mixtures, as the construction would pose a safety risk.

US 2012/275258 A1 discloses a mixing tumbler with two or more compartments, each designed to contain a different component used to prepare a desired mixture, which is structured so as to enable the user to initiate the collapse of the partitions between the compartments, enabling the components to mix and create the desired mixture. The mixing tumbler is divided into two or more compartments, a cover, and separation discs between the said compartments. Applying pressure on a lid to reduce a volume of the flask compresses the partitions causing them to collapse and mix the contents.

GB 2530800 A discloses a container suitable for foodstuff at least partially defined by an outer wall, a foldable portion and an at least partially removable lid. The container is convertible between a first substantially flattened condition in which at least one compartment is defined within and a second in-use condition by manipulation of the foldable portion. The expandable outer walls may be pulled open, i.e. by hand, to allow the mixing of foodstuff, such as ingredients for a meal, before or after cooking (e.g. with a microwave oven).

DE102007017464 discloses a container that is attachable to beverage cans to enable mixing of drinks, e.g. alcoholic or non-alcoholic cocktails. When the container is fixed to a beverage can, a pressure may be applied to open the beverage can and mix the substances in the container and the can.

WO 2013/175288 A1 is directed to a bottle cap to facilitate adding tablets to a beverage in a bottle. The tablets may be electrolytes to aid hydration, vitamins, minerals or pain killers. The bottle cap has a sealed compartment to hold the substance to be added to the beverage. On the lower side of this sealed compartment there may be a breakable membrane to allow the substance into the beverage. The upper part of the bottle cap has a "gas accommodation region" that expands upwards to accommodate gas release.

WO 2013/166148 A1 discloses a container for use in sterilizing food stored in a container. When a container is placed in an oven and exposed to high temperatures, the pressure in a chamber of the container increases. To accommodate this, elastic portions are provided in the lid or container that deform to increase the volume of the container without any discharge of fluid.

WO 2011/094578 A1 and US 2012/248127 A1 are directed towards the pasteurization or sterilization of liquids. The document seeks to address a problem of a vacuum forming due to thermal contraction by providing an adapted bottle lid with a flexible diaphragm member mounted under the bottle lid.

US 2034739 A describes an improved paper cap for a milk bottle. It may be used to prevent spillage if the milk freezes.

US 6053400 A describes a container for food products with an expandable bottom end portion.

### Summary

Aspects of the present invention are set out in the appended independent claims. Variations of the present invention are set out in the appended dependent claims.

Further features and advantages of the invention will become apparent from the following description of certain examples, which is made with reference to the accompanying drawings.

### Brief Description of the Drawings

Figures 1A and 1B are schematic diagrams showing first and second spatial configurations of a mixing vessel according to an example;
Figure 2A is a side view of an example mixing vessel with an attached sealing member;
Figure 2B is a side view of the example mixing vessel without the sealing member;
Figure 2C is a bottom isometric view of the example mixing vessel with the attached sealing member;
Figure 2D is a top isometric view of the example mixing vessel with the attached sealing member;
Figure 2E is a side cross-section of the example mixing vessel showing an internal chamber and the sealing member;
Figure 3A is a top view of a lid casing according to an example;
Figure 3B is a bottom view of the lid casing of Figure 3A;
Figure 4A is a top isometric view of a sealing member according to an example;
Figure 4B is a bottom isometric view of the sealing member of Figure 4A;
Figure 4C is a side isometric view of the sealing member of Figure 4A;
Figure 5 is a flow diagram showing a method of mixing consumable substances; and
Figure 6 is a flow diagram showing a method of a manufacturing a mixing vessel according to an example.

### Detailed Description

Certain examples described herein allow consumable substances to be safely and easily mixed to produce a consumable liquid. The examples described herein may be used to mix "hot" beverages, i.e. liquids with a temperature above an ambient temperature during use. They may also be used to produce beverages where consumable ingredients react when mixed. Examples may allow consumable substances to be vigorously mixed while preventing liquid spraying onto a user when accessed. To achieve this, a mixing vessel is provided with a sealing member that has at least two stable spatial configurations to change a volume of the mixing vessel. The sealing member is arranged to transition between the at least two stable spatial configurations on application of a pressure generated within the mixing vessel during mixing. This transition increases the volume of the mixing vessel. Hence, pressure increases, e.g. due to a heating of air inside the mixing vessel and/or a chemical reaction within the mixing vessel, may be controlled and rapid depressurisation avoided. The second stable spatial configuration may comprise an extended form of a diaphragm or membrane, e.g. a button or the like that "pops" up and stays extended until a user presses down upon it. By remaining in a second stable configuration, the sealing member prevents rapid depressurisation when the mixing vessel is opened. This avoids spraying hot liquid onto a user. The design of the mixing vessels also enables hot beverages to be mixed while avoiding a risk of hot liquid escaping. The mixing vessel may be used to produce hot beverages "on-the-go", e.g. during a commute or outside of a kitchen or the like. The term "consumable" is used to refer to substances that may be consumed, e.g. drunk or eaten, by a human being (or animal).

Certain examples described herein may be particularly applied to the creation of hot beverages such as "hot chocolate". In these cases, in order to create a full emulsion of melted cacao-based solids within a continuous liquid, shear forces may be required. This may be readily achieved by shaking the contents of a mixing vessel as described herein. In certain cases, the mixing vessel may be provided with an internal chamber that allows an air void to be present. This air void may aid two substances to collide during mixing and thus apply the required shear forces.

Certain examples described herein address a problem of mixing hot beverages, e.g. by shaking. If a hot beverage is shaken in a comparative flask without the adaptations described herein, leakage often occurs, and hot liquid may be sprayed from the flask. Comparative solutions for mixing liquids or adding tablets, such as those set out in the background, are not designed for the mixing of hot beverages. Comparative solutions such as those set out in the background are not directed to the problem of mixing hot beverages, such as making hot chocolate or tea. In this case, a starting point is typically a traditional mixing procedure carried out in a cup or saucepan. These comparative solutions do not suggest a flask for hot beverages may be adapted to be used as a mixing vessel, nor do they suggest that this adaptation may take the form of a sealing member with multiple stable configurations that forms part of a removable lid.

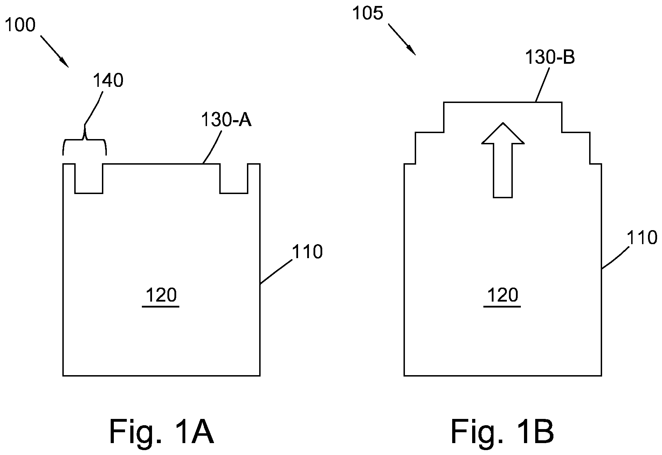

Figure 1A shows a first configuration 100 of an example mixing vessel 110. The term "vessel" is used herein to refer to a hollow container to hold consumable substances. The vessel has an opening whereby substances may be added to the hollow container. The term "mixing" is used to refer to the use of the vessel for mixing consumable substance, wherein mixing covers, amongst others, dissolving, emulsification, and/or reactions between substances, which may be solids or liquids. The mixing vessel comprises an internal chamber 120 that is defined by a chamber wall. The internal chamber 120 may comprise the inside of a cylindrical cup, flask or beaker. The internal chamber 120 is configured to receive consumable substances for mixing. In this case, consumable is used in the sense of being consumable by an animal, preferably a human being, and may be seen as a synonym for edible or potable substances. In one case, the consumable substances are ingestible by an animal for nutritional benefit, i.e. are not harmful substances for the animal. At least one consumable substance comprises a liquid. As such the internal chamber 120 may be liquid-tight at least around a base portion of the mixing vessel, i.e. internally sealed such that the liquid does not leak from the internal chamber 120. The internal chamber 120 may be moulded, e.g. via injection moulding, to provide a liquid-tight chamber.

Figure 1A further shows a sealing member 130 that is in a first spatial configuration (denoted by 130-A). In the example of Figures 1A and 1B, the sealing member 130 provides a seal for the top of the internal chamber 120, wherein the top may provide an opening for supply of substances to the internal chamber 120. In other examples, the sealing member 130 may provide a seal for one or more of a side of the internal chamber 120 and a base of the internal chamber 120, and the sealing member 130 may be provided in a different location to an opening of the internal chamber 120. The first spatial configuration 130-A is stable, in that the sealing member 130 remains in the first spatial configuration 130-A until an external force is applied. The sealing member 130 may comprise a moulded elastomer. In Figures 1A and 1B the sealing member 130 comprises folded or undulated portions 140. For a cylindrical mixing vessel, these may comprise annular portions of the sealing member 130.

Figure 1B shows a second configuration 105 of an example mixing vessel 110. In Figure 1B, the second configuration 105 results from the sealing member 130 having a second stable spatial configuration 130-B. The second spatial configuration 130-B may be seen as an extended spatial configuration. As such, the sealing member 130 has two stable spatial configurations in the example of Figures 1A and 1B. The two stable spatial configurations allow a change in volume of the internal chamber 120. In Figure 1, the internal chamber 120 has a first volume, defined as the space within the walls of the chamber, the base of the chamber and the sealing member 130 in the first spatial configuration 130-A. In Figure 1B, the internal chamber 120 has a second volume, defined as the space within the walls of the chamber, the base of the chamber and the sealing member 130 in the second spatial configuration 130-B. The second volume is larger than the first volume. The configurations are "stable" in the sense that the sealing member is constructed so as to remain in the configuration until an external force is applied. The external force may need to be above a threshold to transition from the second stable spatial configuration, e.g. wherein a push or press by a user is above the threshold, but smaller forces applied internally (e.g. due to pressure changes after cooling and the like) are below the threshold. When mixing, an external force may result from a change in pressure within the mixing vessel, and act to move from the first stable spatial configuration to the second stable spatial configuration. In the second stable spatial configuration, the external force may comprise a force from a user, e.g. pressing down upon the sealing member. The sealing member may be configured to remain in the second stable spatial configuration despite small changes in internal pressure (e.g. as a liquid cools). The stable spatial configurations may be enabled by configuring a set of folds or corrugations of the sealing member and/or a material composition of the sealing member.

In the example of Figures 1A and 1B, the sealing member is arranged to transition between the at least two stable spatial configurations on application of a pressure generated within the internal chamber during mixing. For example, a pressure may increase due to the presence within the chamber of a liquid or solid that is heated above an ambient air temperature. In another case, a pressure may increase due to a chemical reaction initiated by the mixing, such as a release of carbon dioxide. When a predefined pressure is applied to the sealing member 130 from the internal chamber, i.e. to the underside of the sealing member 130 in Figure 1A, this provides an external force that triggers a transition from the first stable spatial configuration 130-A to the second stable spatial configuration 130-B. As such, in these examples, the sealing member 130 may be seen as a bimodal sealing member having two states. In other examples a sealing member 130 may have more stable states, e.g. may be able to transition between more than two states depending on an applied pressure from the internal chamber. The sealing member 130 allows an increase in the volume of the internal chamber 120. Over pressurization of the mixing vessel 110 may be further limited by an elastic nature of the sealing member. For example, if the sealing member has elasticity, it may further elastically expand beyond the second stable spatial configuration if excessive pressure is generated. The sealing member may be configured to remain in the second stable configuration until a user removes the lid and applies a force to the sealing member, e.g. by pressing down with a finger.

In the example mixing vessel of Figure 1, the sealing member 130 comprises a pressure seal and an expanding section. In certain cases, these may be provided as separate components. For example, a pressure seal may be provided as part of a lid (e.g. in an upper annular wall portion of the mixing vessel and/or as a lower portion of a removable lid) and an expanding section may be provided in a side or base of the mixing vessel 110, or may comprise a separate component of a lid for the mixing vessel 110.

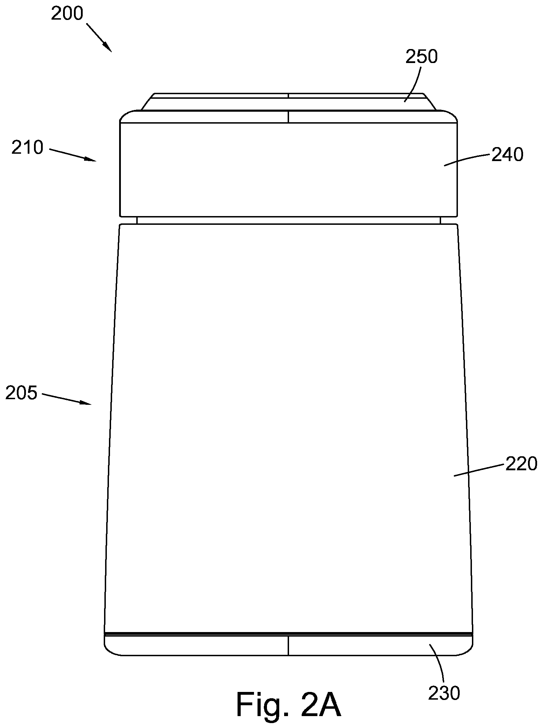

Figures 2A to 2E show a mixing vessel 200 according to another example. This mixing vessel may comprise an implementation of the mixing vessel shown in Figures 1A and 1B. The mixing vessel 200 comprises a flask or lower portion 205 and a lid 210. The flask 205 provides an internal chamber 215 that may be seen as implementing internal chamber 120 of Figures 1A and 1B. The flask 205 may be in the form of a cup or other receptacle that is also suitable for serving a mixed liquid, or may be suitable for pouring a mixed liquid into a serving receptacle. The lid 210 seals an opening at the top of the flask 205 and so may be seen as implementing a sealing member 130 of Figures 1A and 1B. The lid 210 is removable. The lid 210 may be removed to access a mixed substance within the flask 205. The mixed substance may comprise a hot chocolate beverage.

Figure 2A shows the lid 210 affixed atop the flask 205. The flask 205 comprises an external wall 220 and a base 230. In the present example, the external wall 220 is shaped as the frustum of a cone, wherein a neck of the flask 205 extends from an upper plane of the frustum. In other examples, the flask 205 may have other shapes, such as cylindrical or polyhedral configurations. In one case, the flask 205 may be cuboid in shape. Although, in the examples of Figures 2A to 2E, the lid 210 is affixed to the top of the flask 205 such that a plane of the lid 210 and a top of the flask 205 are parallel, in other examples the lid 210 may be affixed in another configuration, e.g. at an angle, at the base or at a side of the flask 205.

The lid 210 in Figure 2A comprises a lid casing 240 and a diaphragm 250. The diaphragm 250 is sealably mounted within the lid casing 240, such that liquid cannot escape the flask 205 when the lid 210 is in place. The diaphragm 250 has at least two deformation states corresponding to respective stable spatial configurations. For example, the diaphragm 250 may be deformable in a similar manner to the sealing member 130 in Figures 1A and 1B. The at least two deformation states may comprise an unextended spatial configuration and an extended spatial configuration. Figures 2A to 2E show an unextended spatial configuration. In this case, the extended spatial configuration increases the volume of the flask 205 by extending upwards from the perspective of Figure 2A.

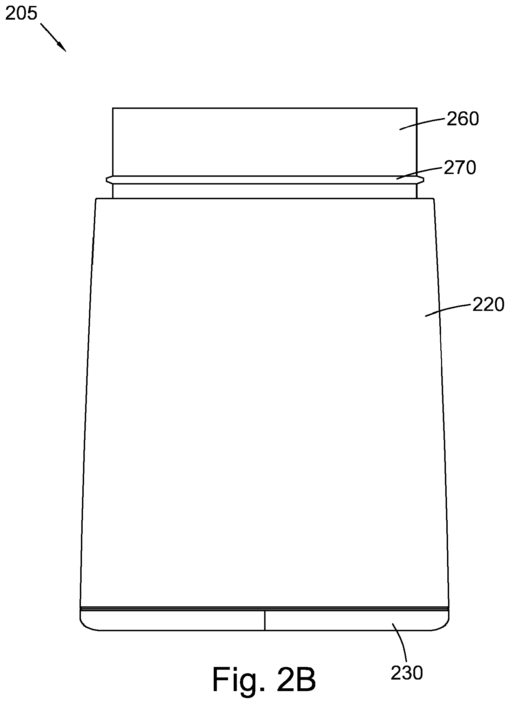

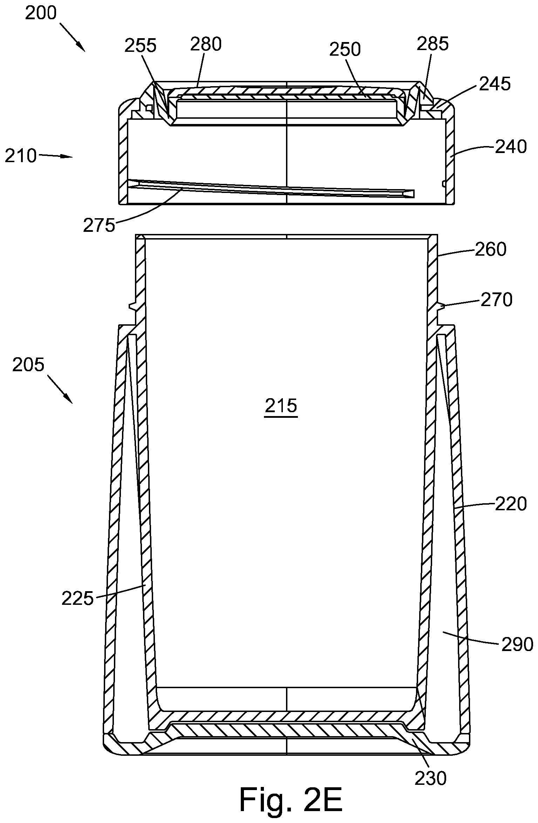

Figure 2B shows the flask 205 with the lid 210 removed. In this view, a neck 260 of the flask 205 is visible, the neck extending from a top of the frustum formed by the external wall 220 and forming an upper portion of an internal chamber 215 within the flask 205. The neck 260 surrounds an opening at the top of the flask 205 for providing consumable substances (as shown in more detail in Figure 2E). In Figure 2B, the neck 260 comprises a thread 270 for attaching the lid 210. In other examples, other coupling mechanisms may be used, including latches and/or magnetic couplings. The thread 270 may comprise a half-turn thread. The lid 210 may have a corresponding thread that allows the lid to be screwed onto the top of the flask 205 to seal the flask 205.

In certain examples, the lid 210 may be coupled to the neck 260 (or another portion of the flask 205) via a bayonet mount. A bayonet mount may comprise radial (male) extrusions, such as pins, tabs or flanges, formed on the outer surface of the neck 260 and corresponding (female) apertures or receptors on the lid casing 240 to receive the extrusions. These apertures may be L-shaped or the like, with an opening at a base of the lid 210 to receive a corresponding male extrusion and an elongate portion that extends circumferentially from the opening to receive the male extrusion as the lid 210 is rotated around the neck 260. The elongate portion may be sloped, e.g. upwards from the opening such that when the lid 210 is rotated, the lid 210 is compressed against the top of the neck 260, in turn compressing the diaphragm 250, e.g. acting as a gasket, and sealing the flask 205. The male extrusions may also be angled to correspond to this slope. A plurality of male extrusions and corresponding female apertures may be provided. In one case, two male extrusions may be provided on either side of the neck 260, with corresponding apertures being provided on either side of the lid casing 240. A bayonet mount configuration has been found to provide a robust seal for the flask 205 that prevents leakage of hot beverages. It also works well with the diaphragm configuration and yet enables vigorous shaking of the flask 205. The diaphragm 250 may also provide a natural resistive force that urges the lid 210 away from the flask 205 helping to lock the male extrusions within their corresponding female apertures. In other cases, other urging means, such as one or more spring members, may be provided to lock the lid 210. The female aperture(s) may also be suitably shaped to secure the male extrusions. In other configurations the location of the male and female components of the coupling mechanism may be reversed, e.g. the neck 260 may comprise apertures or slots and the lid casing 240 may comprise extrusions.

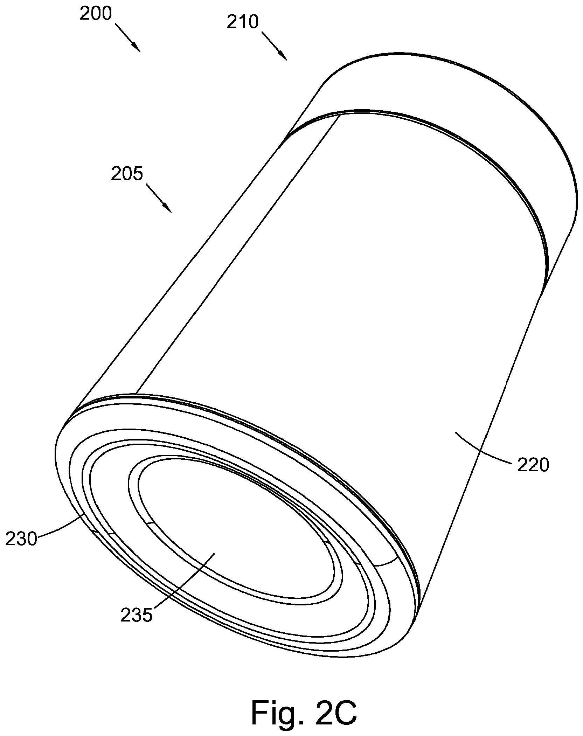

Figure 2C shows a bottom isometric view of the mixing vessel 200 with the lid 210 attached to the flask 205. The base 230 of the flask 205 is visible in Figure 2C. The base 230 has an indented centre 235 in the present example. Other configurations are possible in other examples. In the present example, the base 230 may be formed by welding a sealing base disk to the external wall 220 to create a hermetic seal.

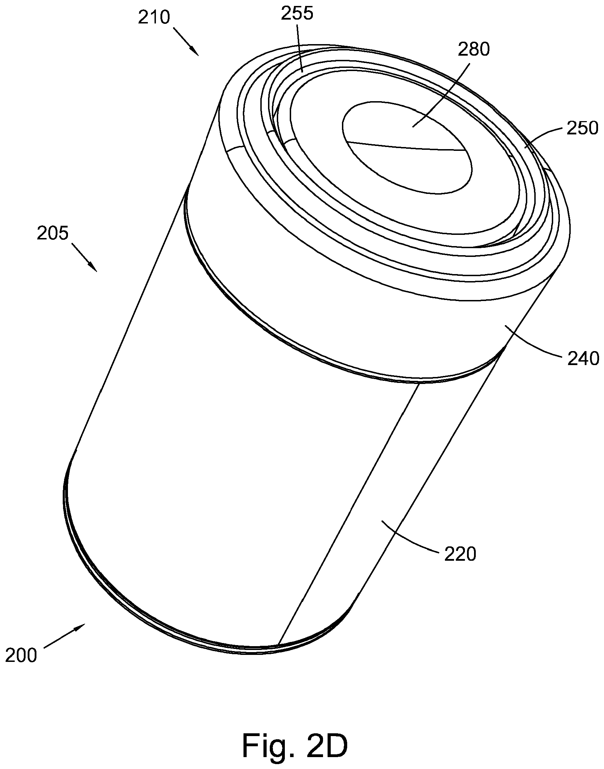

Figure 2D shows a top isometric view of the mixing vessel 200. In this view different portions of the lid 210 are visible. The lid casing 240 is formed from a cylindrical portion that has a central aperture. As such the lid casing 240 forms an annular portion of the lid 210. In Figure 2D, the diaphragm 250 resides within the central aperture to form an upper portion of the lid 210. In the present example, a disk 280 is coupled to the diaphragm 250 to form a button. The button is pressable to enable a transition between the extended spatial configuration and the unextended spatial configuration of the diaphragm 250. For example, when the diaphragm 250 is in the extended spatial configuration it may project upwards from the lid casing 240. By applying a downwards force to the disk 280, e.g. using a finger or the like, the diaphragm 250 may be pushed from the extended stable configuration back to the unextended configuration shown in Figure 2D. The disk 280 may also function to rigidify the diaphragm 250 concentrically. The button may be a "reset" button for the diaphragm 250.

In Figure 2D, folded or concertina portions 255 of the diaphragm 250 are visible. These may be similar to folded portions 140. Folded portions 255 may enable multiple stable spatial configurations of the diaphragm 250.

Figure 2E shows a cross-section through a vertical mid-plane of the flask 205 and lid 210. Figure 2E shows the internal chamber 215 of the flask 205. The internal chamber 215 has an opening at the top of the flask 205 formed by the neck 260. The internal chamber 215 is formed within an inner wall 225 that resides within external wall 220. Between the external wall 220 and the inner wall 225 lies a cavity 290. The cavity 290 may comprise a gas or a vacuum. The cavity 290 may comprise an air cavity (e.g. containing dry air). The cavity 290 may insulate the internal chamber 215. When a liquid with a temperature above an ambient temperature is used, the cavity 290 may both reduce heat loss from the internal chamber 215 and/or reduce a heating of the external wall 220. This may avoid a user of the mixing vessel 200 having to hold an uncomfortably hot vessel. It may also keep a hot beverage warm for a period of time. In other examples, a single wall may be provided together with a heat sleeve, e.g. a silicone heat sleeve, to thermally insulate a hand of a user from the wall of the flask 205.

In Figure 2E, the internal chamber 215 is sealed by a base above base 230. The internal chamber 215 may be constructed from a continuous moulding. The neck 260 of the flask 205 forms an upper portion of the inner wall 225 of the internal chamber 215. In the present example, the outer surface of the base of the inner wall 225 comprises a stepped portion to facilitate location of the base 230 of the flask 205. In Figure 2E, a stepped portion on the outer surface of the base of the inner wall 225 complements a corresponding stepped portion on the underside of the base 230.

In certain examples, one or more of the inner wall 225 and the external wall 220 may comprise a set of markings to facilitate a measurement of consumable substances. The markings may be formed by one or more of embossing, engraving, painting and moulding, amongst others. In certain cases, the inner wall 225 and the external wall 220 may be translucent or transparent. In these cases, a marking on the external wall 220 may be used. If at least one of the external wall 220 and the inner wall 225 is opaque, then the markings may be formed on an inner surface of the inner wall 225. In this case, measurement may be made against the markings by viewing the inner chamber 215 from above with the lid 210 removed.

The set of markings may comprise a first marking to indicate a fill line for a first consumable substance and a second marking to indicate a fill line for a second consumable substance. For example, if the mixing vessel 200 comprises a "mixer" for "hot chocolate", the first marking may indicate a quantity of a cacao-based solid, such as powdered, flaked, shaved or grated chocolate. The second marking may then indicate a quantity of hot milk, coffee or water (amongst other potable substances).

In one case, mixing may be performed in two stages. In this case, the second marking may indicate an initial quantity of liquid to mix with the first consumable substance. Following an initial mixing, a third marking may be provided to indicate a further quantity of liquid to complete a serving. For example, for a 250ml to 300ml single beverage serving, a second marking may indicate 20-40ml of liquid and the third making may indicate a total of 250-300ml of liquid within the internal chamber 215. The further quantity of liquid may comprise a further quantity of the second consumable substance or a third consumable substance. For example, milk may be used for the initial mixing followed by water or coffee.

Returning to Figure 2E, a cross-section of the lid 210 is shown above the flask 205. The lid 210 comprises the lid casing 240. The lid casing 240 comprises a thread 275 that complements the thread 270 of the neck 260 of the flask 205. The thread 275 may comprise a half-turn thread. In use, the lid 210 may be attached to the flask 205 by placing the lid 210 upon the flask 205 and twisting until the lid 210 is secure.

In the present example, the lid casing 240 has an upper flange 245 that forms an annular edge of the central aperture that houses the diaphragm 250. The flange 245 projects into the centre of the central aperture. In this example, the diaphragm 250 has an annular groove 285 that mates with the flange 245. The annular groove 285 is formed within a lateral portion of the diaphragm 250 between an upper and lower lip. The upper lip forms a seal above the flange 245 of the lid casing 240 and the lower lip extends laterally past the upper lip under the flange 245. The lower lip forms an annular portion of the diaphragm 250 that, when the lid 210 is fastened to the flask 205, contacts an upper annular edge of the neck 260. As such, the annular portion of the diaphragm 250 forms a gasket between the upper annular edge of the internal chamber 215 and inner wall 225. This enables a liquid-tight and air-tight seal to be achieved. If the diaphragm 250 comprises a material such as an elastomer, it may form a soft gasket to which the flask 205 is screwed against. The flange 245 and the annular groove 285 may have a complementary pattern, e.g. a toothed arrangement as discussed later below, such that the diaphragm 250 is statically mounted within the central aperture of the lid casing 240, i.e. does not rotate or otherwise move within the lid casing 240.

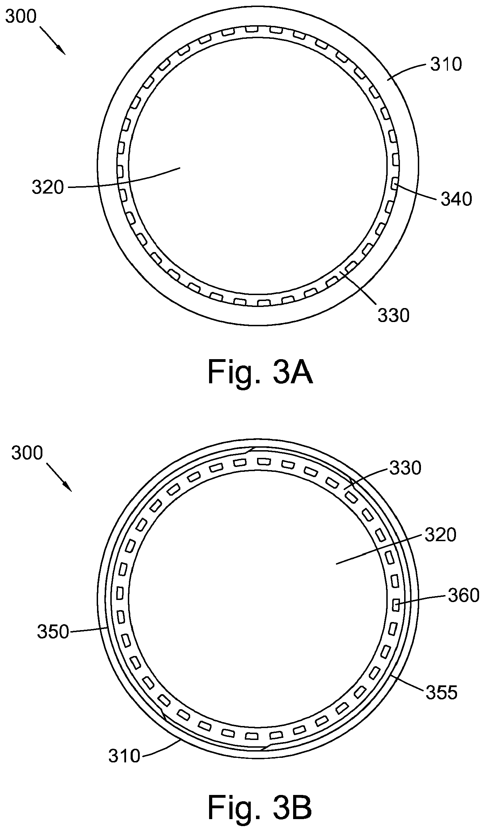

Figures 3A and 3B show a lid casing 300 that may be used to implement the lid casing 240 in Figures 2A to 2E. Figure 3A shows a top view and Figure 3B shows a bottom view.

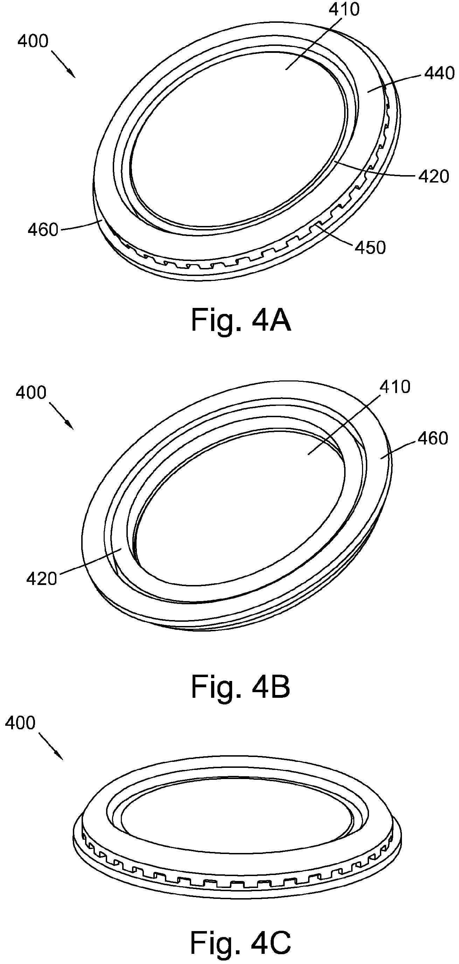

A shown in Figure 3A, the lid casing 300 has a lateral wall 310 formed around a central aperture 320. The central aperture 320 is arranged to accommodate a diaphragm such as 250 in Figures 2A to 2E or 400 in Figures 4A to 4C. The lateral wall 310 of the lid casing 300 has a flange 330 that projects into the central aperture 320. The flange 330 is arranged below a top of the lateral wall 310 such that an upper lip of the diaphragm may be accommodated on top of the flange 330, wherein a side of the upper lip of the diaphragm abuts an inner lateral surface of the lateral wall 310. At a join between an upper surface of the flange 330 and the inner lateral surface of the lateral wall 310 are a series of teeth or castellations 340, i.e. regularly spaced notches. These castellations 340 are configured to mate with corresponding apertures in a side surface of the diaphragm to secure the diaphragm within the central aperture 320. These castellations 340 may be formed by over-moulding the diaphragm over the lid casing, e.g. to ensure an accurate fit.

Figure 3B shows a view of the lid casing 300 from below. An inner surface of the lateral wall 310 below the flange 330 comprises a first thread 350 and a second thread 355 for affixing the lid casing 300 to a chamber body such as flask 205 in Figures 2A to 2E. In other examples, a continuous thread or another coupling mechanism may be provided. The lower surface of the flange 330 is provided with a series of regularspaced surface features 360. These may extend a few millimetres from the surface to grip a lower lip of the diaphragm, wherein the lower lip is compressed in use between a top of an inner wall of the chamber body and the lower surface of the flange 330.

Figures 4A to 4C show a variety of isometric views of an example sealing member 400. This sealing member 400 may be used to provide diaphragm 250 in Figures 2A to 2E and/or sealing member 130 in Figures 1A and 1B.

Figure 4A shows a top isometric view of the sealing member 400. The sealing member 400 comprises a central planar surface 410. A disk to form a button may be affixed to the central planar surface 410. A set of folded side portions 420 of the sealing member 400 allow the member to have a number of stable spatial configurations. In Figures 4A to 4C, the sealing member 400 is unextended and as such folded side portions 420 form an annular channel around the central planar surface 410. When a pressure is applied to an underside of the central planar surface 410 as shown in Figure 4A, this applies a force to the folded side portions 420 and cause them to transition to an unfolded or extended state such that the central planar surface 410 is displaced upwards. The sealing member 400 may comprise an elastomer, such as one of a thermoplastic elastomer and a silicone. The thermoplastic elastomer may comprise a thermoplastic vulcanizate.

The folded side portions 420 are accommodated within an outer annular portion 440. The outer annular portion 440 has a thickness that is greater than the thickness of the central planar surface 410 and the folded side portions 420. The outer annular portion 440 forms a rim that mates with the flange 330 of the lid casing 300 of Figures 3A and 3B. In Figure 4A, a lateral wall of the outer annular portion 440 has a series of regularly spaced apertures 450. These apertures are formed above a lower lip 460 that forms an annular base of the sealing member 400. The apertures are arranged to receive the castellations 340 of the lid casing 300 as shown in Figure 3A. These secure the sealing member 400 within the central aperture 320 of the lid casing 300. The regularspaced surface features 360 of the lid casing 300 of Figure 3B are pushed against an upper surface of the lower lip 460 when the lid casing 300 is fastened to a chamber body.

Figures 4B and 4C further show different views of the sealing member 400. The lower surface of the lower lip 460 as shown in Figure 4B is, in use, pressed against an upper annular edge of a chamber body to seal a chamber, such as internal chamber 215. Figure 4B also shows how the folded side portions 420 are laterally nested in an unextended or first stable spatial configuration. Figure 4C shows an orientation of the sealing member 400 when placed into the lid casing 300. In certain implementations, the sealing member 400 may be further affixed to the lid casing 300 by a fastening agent such as glue. In other implementations, the sealing member 400 may be removable from the lid casing 300, e.g. by deforming the sealing member 400. Removable of the sealing member 400 from the lid casing 300 may aid cleaning of the mixing vessel while still providing a suitable seal.

The castellations 340 (e.g. comb features) around the sealing member 400 and lid casing 300 enable a secure non-bonding over-mould of the sealing member 400 onto the lid casing 300. This may be useful if the sealing member 400 and lid casing 300 are constructed from materials that are difficult to chemically bond, such as thermoplastic elastomers / silicones and polypropylene.

The examples discussed above may be provided at a variety of sizes. For example, the flask 205 may be arranged to mix a single serving of a consumable liquid, e.g. hold between 250-350ml of liquid, or multiple servings, e.g. up to 11 of liquid. For a single serving, the flask 205 may be fashioned in the form of a cup or mug for consuming the mixed liquid. For example, the flask 205 may be provided with one or more arms or handles. In one example, the lid casing 300 may be of a diameter in the range 7.5cm to 12.5cm and the external wall 220 may have a height of between 10cm to 15cm. The lid casing 300 may have a height of between 2.5cm to 5 cm.

Although the lid casing 300 and seal member 400 are shown as circular in the Figures, they may be other shapes in other examples. For example, the lid 210 may comprise a square or rectangular lid casing that is pivotably coupled to a cuboid flask 205 at one side.

The flask 205 as shown in Figures 2A to 2E may be constructed from a moulded polycarbonate and the lid casing 300 may be constructed from a moulded polypropylene. In other examples, the flask 205 may be constructed, at least in part, by formed glass or ceramic materials. The disk 280 may be formed from a moulded polypropylene.

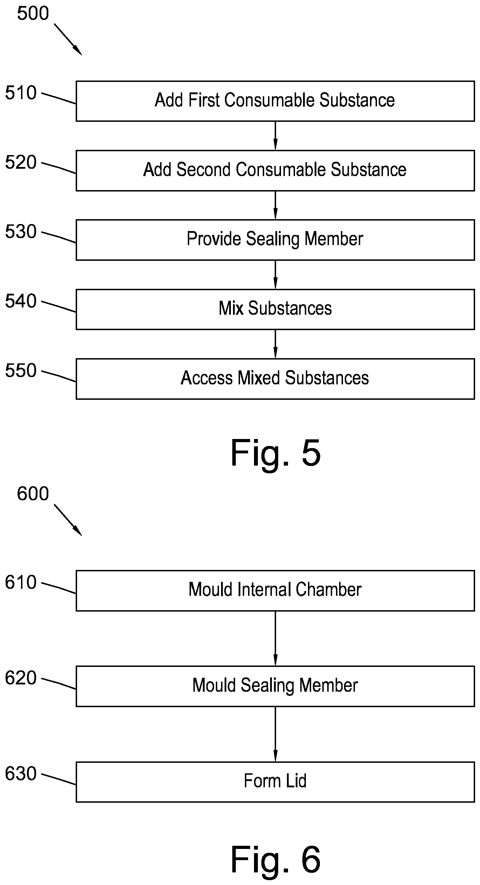

Figure 5 is a flow chart showing a method 500 of mixing consumable substances. The method may be applied using the previously described examples. At block 510, a first consumable substance is added into a mixing vessel. The mixing vessel may comprise the internal chamber 120 or 215 as shown in Figures 1A or 2E. The first consumable substance may comprise a liquid or a solid for mixing. In the latter case, the solid may comprise a powdered, flaked, grated or shaved substance. The first consumable substance may be cacao-based in certain examples. Block 510 may involve filling an internal chamber of the mixing vessel with a first consumable substance until said substance fills the internal chamber up to a first marking, e.g. on the side of the internal chamber. At block 520, a second consumable substance is added into the mixing vessel. At least one of the first and second consumable substances comprises a liquid. In one case, both substances may be liquids. In another case, only the second substance may be a liquid. The second consumable substance may be added to an internal chamber up to a second marking. The liquid may be a consumable liquid with a temperature greater than an ambient air temperature within the mixing vessel, i.e. a "hot" liquid. A hot liquid may be heated externally to the mixing vessel or within the mixing vessel. In the latter case, a cold consumable liquid may be added on top of the first consumable substance and the mixing vessel may be heated. In this case, the mixing vessel may be heated by placing the mixing vessel on a heat source, such as a hob, or within a microwave. In this case, the cold consumable liquid may be heated to a temperature that is above 50 degrees Celsius.

At block 530 a sealing member is provided to seal the mixing vessel. The sealing member may be separate from the mixing vessel, similar to lid 210, or may be integral to the mixing vessel, e.g. built into a side wall or base. Sealing the mixing vessel includes setting the sealing member to a first stable spatial configuration. In one case, this may comprise attaching a lid such as lid 210 and ensuring that a disk such as 280 is depressed. Providing the sealing member may comprise screwing a lid casing such as 300 onto a flask or chamber such as flask 205, wherein the lid casing comprises a sealing member such as 250 or 400.

At block 540, the first and second consumable substances are mixed within the mixing vessel. If the mixing vessel is sealed, i.e. liquid-tight and air-tight, this may comprise shaking the mixing vessel. For example, this may be performed by holding the external wall 220 of the flask 205 and shaking up and down and/or side-to-side. In another example, the mixing vessel may comprise a mixing mechanism, such as an internal panel or stirring device. The mixing mechanism may be hand-activated or motorised, e.g. using a battery-operated motor. The mixing mechanism may be built into the base 230 of the flask 205. The sealing member ensures that liquid does not escape during mixing.

The mixing at block 540 generates a pressure within the mixing vessel. For example, as a hot liquid is poured into the mixing vessel, it begins to heat the air immediately above it. This air rises as it heats, and fresh, cooler air is drawn in to replace it. Once the sealing member is affixed, heated air is contained within the mixing vessel. As liquids such as water and milk have a specific heat capacity of greater than that of air, e.g. up to four times greater, the liquid has sufficient energy contained to heat the air above the liquid to the same temperature. Mixing, e.g. shaking, of the mixing vessel may also increase surface contact between the liquid and the air to further conductive heating. As the air within the sealed mixing vessel is heated, the pressure within the mixing vessel increases. This may also be the case when the first and second consumable substances react during mixing and generate a gaseous by-product. This by-product, as well as or in place of the heating effect, may also increase pressure within the mixing vessel.

Mixing the first and second substances may enable emulsification through the application of shear forces. For example, in making a hot chocolate, shaking the mixing vessel may provide the high shear forces to create a full emulsion of dispersed continuous liquid.

The pressure within the mixing vessel that is generated at block 540 applies a force to the sealing member and causes it to transition to a second stable spatial configuration. This may be in the form of the button 280 "popping up" when a predetermined pressure is reached within the mixing vessel. The predetermined pressure may be set through selection of material properties of the sealing member, e.g. elasticity, and/or configuration of folded portions such as 140. The second stable spatial configuration increases the volume within the mixing vessel, and as such lowers the pressure within. As an additional effect, the transition to the second spatial configuration may also be configured to indicate that a beverage is suitably mixed.

Increasing the volume and lowering the pressure is beneficial. If a pressure that is greater than atmospheric pressure is maintained within the mixing vessel, this can lead to liquid being forced through any seal of the mixing vessel. For example, liquid may leak out of a lid. An expansion in internal volume also increases the internal air volume within the mixing vessel. This enables larger shear forces to be generated through increased air turbulence.

At block 550, the mixed liquid is accessed with the sealing member in the second stable spatial configuration. This may comprise removing the sealing member in the second stable spatial configuration, e.g. by unfastening lid casing 300 when the sealing member 400 is in a configuration similar to that shown in Figure 1B. By lowering the pressure inside the mixing vessel, an amount of torque required to unfasten the lid casing 300 and open a lid of the mixing vessel is reduced. Moreover, the increase in volume, and reduction in pressure, avoids rapid depressurisation when access to the contents of the mixing vessel is desired. This may avoid spraying a user with hot liquids.

In one variation of method 500, the first or second consumable substance may comprise a quantity of liquid that is small in comparison to a desired quantity of mixed liquid. In this case, the second marking may indicate a first amount of liquid and a third marking may be provided to indicate a full serving or set of servings. Using a small initial amount of liquid may increase emulsification, as a significant air void within the internal chamber may enable the two substances to crash into each other and provide high shear forces. When the first substance is a cacao-based product and the second substance is milk, a brisk shake of the mixing vessel may create an emulsion. A user may top up the second consumable substance by removing the sealing member in the second spatial configuration and adding a further quantity of the second consumable substance, e.g. up to a third marking. The sealing member may then be reset, e.g. by pressing disk, either before or after the sealing member is reattached, e.g. by screwing lid casing 300 onto flask 205. Further mixing of the substances may then be applied to create a larger quantity of mixed liquid, e.g. a serving amount. A user may select a particular quantity of second consumable substance to add dependent on desired strength.

Certain examples described herein provide a pressure-activated sealing member that expands as an internal pressure inside a mixing vessel increases. This increases internal volume in line with a gas volume. A sealing member may be provided in the form of an elastomeric diaphragm. This diaphragm may be bi-modal, i.e. have two stable or "at-rest" states when no force is applied. This ensures that the sealing member does not elastically deform back to an initial state, i.e. prevents the sealing member exerting a pressure back onto the gas within the mixing vessel.

Certain examples described herein combine a pressure seal or gasket and an expanding section or diaphragm into a single component. Providing these elements as a combined unit allows a reduction in complexity and cost, and removes a possible leakage path.

Certain examples described herein provide a mixing vessel that may be upturned and vigorously shaken without spillage.

Certain examples described herein may be beneficial for mixing hot liquids such as, amongst others, hot drinks, hot chocolate, hot alcoholic drinks ("cocktails"), coffees, teas, milk and other protein shakes, hot soups and sauces and milk formula (e.g. infant milk formula). Hot liquids may be mixed safely and easily. A resultant mixed product may have an improved taste compared to previous mixing methods due to the ability to apply high shear forces and successfully provide shear-enacted emulsification.

Figure 6 shows an example method 600 of manufacturing a mixing vessel for consumable liquids. For example, the method may be used to construct the mixing vessel 200 shown in Figures 2A to 2E. At block 610, an internal chamber of the mixing vessel is moulded. This may comprise moulding one or more of external wall 220 and internal wall 225 in Figure 2E. At block 620, a sealing member is moulded over one or more of a lid casing and an opening of the internal chamber, the sealing member having at least two stable spatial configurations. This may comprise forming sealing member 400 as shown in Figures 4A to 4C. This ensures a gas and liquid tight seal. At block 630, a lid of the mixing vessel is formed comprising the over-moulded sealing member.

In one example, block 610 may comprise injection moulding a conical frustum having an inner wall and an outer wall, wherein a space between the inner wall and the outer wall comprises an insulating cavity of the mixing vessel. For example, this may comprise forming external wall 220 and inner wall 225 as shown in Figure 2E. This may comprise creating the external wall 220 as a skirt that extends out radially from inner wall 225 in a line of draw, inner wall 225 and neck 260 forming a primary container.

In one example, block 610 may comprise sealing a moulded disk to a base of the moulded internal chamber to create a base of the mixing vessel. For example, the moulded disk may comprise base 230 as shown in Figure 2E. The moulded disk may be ultrasonically welded to a base of an internal chamber having inner wall 225 to create a hermetic seal. In this way a clear base may be welded to an initial cup or flask to create a sealed clear mixing vessel.

In one example, block 630 may comprise coupling a moulded disk to a centre of the sealing member to form a button to transition between the two stable spatial configurations. The mould disk may comprise disk 280. Block 630 may comprise injection moulding a lid casing such as lid casing 300. The sealing member may be fitted with the lid casing as explained with reference to lid casing 300 and sealing member 400. The internal chamber may be formed from polycarbonate. In one case, the polycarbonate may be clear polycarbonate. The sealing member may comprise one of a thermoplastic elastomer and a silicone. A casing for the lid may comprise comprises polypropylene.

Although certain examples described herein feature a disk that is fastened to a diaphragm for use as a reset button, other examples may comprise a reset button formed in a different manner. For example, a reset button may be formed from the diaphragm itself or may comprise part of the lid. In general, a reset button is pressable from outside the internal chamber to enable a transition between the extended spatial configuration and the unextended spatial configuration to reset the mixing vessel, wherein the sealing member is arranged to remain in the extended spatial configuration until the reset button is pressed.

In certain examples, a mixing vessel for consumable liquids, comprises an internal chamber for receiving consumable substances for mixing, at least one consumable substance comprising a liquid and a sealing member for the internal chamber having at least two stable spatial configurations to change a volume of the internal chamber. In this case, the sealing member is arranged to transition between the at least two stable spatial configurations on application of a pressure generated within the internal chamber during mixing to increase the volume of the internal chamber.

In these examples, the sealing member may comprise a diaphragm with at least two deformation states corresponding to the at least two stable spatial configurations. The at least two deformation states may comprise an unextended spatial configuration and an extended spatial configuration, wherein the extended spatial configuration increases the volume of the internal chamber. The sealing member may comprise a disk coupled to the diaphragm to form a button, the button being pressable to enable a transition between the extended spatial configuration and the unextended spatial configuration. In other cases, a central portion of the diaphragm may comprise a rigid portion that functions as the disk, without requiring an additional component to be coupled to the diaphragm. In certain cases, the diaphragm comprises an elastomer. An annular portion of the diaphragm may form a gasket between an upper annular edge of the internal chamber and a casing of the sealing member.

In these examples, there may be an outer wall, the internal chamber being located within the outer wall. A cavity between the internal chamber and the outer wall may also be provided, e.g. to provide thermal insulation for hot beverages. "Hot" may be defined as having a temperature greater than an ambient air temperature within the internal chamber, e.g. typically above 25-30 degrees Celsius. "Hot milk" as described herein may be between 60 and 70 degrees Celsius, wherein "hot" may be any temperature above 50 degrees Celsius.

In certain examples, the internal chamber comprises a first marking to indicate a fill line for a first consumable substance and a second marking to indicate a fill line for a second consumable substance, the second consumable substance comprising the consumable liquid. A third marking to indicate a fill line for an additional amount of the consumable liquid may also be provided.

The sealing member may comprise a removable lid of the mixing vessel that seals the internal chamber. This may be a screw lid, a bayonet mount lid, a clasp or "flip-top" lid, amongst others.

In certain examples, a method of mixing consumable substances, comprises the following steps:
adding a first consumable substance into a mixing vessel;
adding a second consumable substance into the mixing vessel, wherein at least one of the first and second consumable substances comprises a liquid;
providing a sealing member to seal the mixing vessel, including setting the sealing member to a first stable spatial configuration;
mixing the first and second consumable substances within the mixing vessel, wherein said mixing generates a pressure within the mixing vessel and application of said pressure to the sealing member causes the sealing member to transition to a second stable spatial configuration that increases a volume of the mixing vessel; and
accessing the mixed consumable substances with the sealing member in the second stable spatial configuration.

Mixing may comprise shaking the mixing vessel. Mixing may comprise emulsifying the first and second consumable substances by applying shear forces to the first and second consumable substances. The method may additional comprise the steps of adding a further quantity of the second consumable substance into the mixing vessel, sealing the mixing vessel, including resetting the sealing member to the first stable spatial configuration, and further mixing the first and second consumable substances. The first consumable substance may comprise a cacao-based solid (e.g. chocolate) and the second consumable substance may comprise a consumable liquid with a temperature greater than an ambient air temperature within the mixing vessel (e.g. "hot milk"). Providing a sealing member to seal the mixing vessel may comprise securing a lid onto the mixing vessel, the lid comprising a diaphragm, wherein the first stable spatial configuration comprises an unextended spatial configuration of the diaphragm and the second stable spatial configuration an extended spatial configuration of the diaphragm.

In certain examples, a method of manufacturing a mixing vessel for consumable liquids, comprises moulding an internal chamber of the mixing vessel; moulding a sealing member, the sealing member having at least two stable spatial configurations; and forming a lid of the mixing vessel comprising the moulded sealing member. The sealing member may be over-moulded, e.g, with relation to one or more of a housing of the lid and a housing for the internal chamber.

In certain cases, a moulded disk may be sealed to a base of the moulded internal chamber to create a base of the mixing vessel. Moulding an internal chamber of the mixing vessel may comprise injection moulding a conical frustum having an inner wall and an outer wall, wherein a space between the inner wall and the outer wall comprises an insulating cavity of the mixing vessel. The method may also comprise coupling a moulded disk to a centre of the sealing member to form a button to transition between the two stable spatial configurations. The internal chamber may comprise polycarbonate; the sealing member may comprise one of a thermoplastic elastomer and a silicone; and the lid may comprise polypropylene.

The above examples are to be understood as being illustrative of the invention. Further examples and variations of the invention are envisaged, for example as indicated in places above. Further examples of variations include: the cavity 290 may be exchanged for, and/or complemented with, a non-conductive band of insulating material (e.g. cork or thermoplastic elastomer); the sealing member may comprise any suitable diaphragm, piston or gland; "hot" may apply to liquids above around 25 degrees Celsius; references to milk may include non-dairy milk substitutes; and liquids may comprise foamed and/or frothed liquids. In certain cases, a removable "glamour cap", cup or further lid may be fitted on top of the lid 210 to hide the diaphragm 250 from view. In certain cases, a mechanism may be provided to prevent the button on the diaphragm from being pressed (i.e. from returning the diaphragm to an unextended configuration) before the lid 210 is opened. This mechanism may comprise a geared system or clutch mounted in combination with a cap or further lid. In certain examples, one or more buttons may be configured on the lid 210 to encourage a user to reset the device once the mixing vessel is opened. For example, a mechanism may be provided to reset the button without user intervention once the lid is removed. In certain variations, a mechanical frame for an elastic member may be provided to enable an extended or unextended state, e.g. using ratcheted movement or the like. Furthermore, equivalents and modifications not described above may also be employed without departing from the scope of the invention, which is defined in the accompanying claims.

## Claims

1. A mixing vessel (100) for consumable liquids, comprising:
a flask comprising:
an internal chamber (120) for receiving consumable substances for mixing, at least one consumable substance comprising a liquid, wherein the internal chamber (120) is configured to receive a consumable liquid with a temperature greater than an ambient air temperature within the internal chamber (120),
an outer wall, the internal chamber being located within the outer wall, and
a heat sleeve, or a cavity between the internal chamber and the outer wall to thermally insulate the internal chamber; and
a removable lid,
wherein the removable lid comprises a sealing member (130) to seal the internal chamber (120), the sealing member having at least a first stable spatial configuration (130-A) and a second stable spatial configuration (130-B) to change a volume of the internal chamber (120), and
wherein the sealing member (130) of the removable lid is arranged to transition between the first and second stable spatial configurations on application of a pressure generated within the internal chamber (120) during mixing to increase the volume of the internal chamber (130),
wherein the first and second stable spatial configurations are stable in the sense that the sealing member (130) is constructed so as to remain in the respective first and second stable spatial configurations until an external force is applied,
wherein, the sealing member (130) is arranged to maintain the second stable spatial configuration (130-B) until an external force is applied to the sealing member (130), the external force being applied to an external surface of the removable lid.

2. The mixing vessel (100) of claim 1, wherein the sealing member (130) comprises a diaphragm (250) with at least two deformation states corresponding to the at least two stable spatial configurations.

3. The mixing vessel (100) of claim 2, wherein the at least two deformation states comprise an unextended spatial configuration and an extended spatial configuration, wherein the extended spatial configuration increases the volume of the internal chamber, wherein the sealing member (130) comprises a button, the button being pressable to enable a transition between the extended spatial configuration and the unextended spatial configuration.

4. The mixing vessel (100) of any one of claims 2 to 3, wherein the diaphragm (250) comprises an elastomer.

5. The mixing vessel (100) of any one of claims 2 to 4, wherein an annular portion of the diaphragm (250) forms a gasket between an upper annular edge of the internal chamber (120) and a casing of the sealing member (130).

6. The mixing vessel (100) of any one of claims 2 to 5, wherein the flask is constructed from one of:
moulded polycarbonate;
formed glass; and
ceramic materials.

7. The mixing vessel (100) of any one of claims 1 to 6, wherein the flask (205) and the removable lid comprise respective parts of a bayonet fastening mechanism to secure the removable lid to the flask and seal the internal chamber (120).

8. A method (500) of mixing consumable substances, comprising:
adding (510) a first consumable substance into an internal chamber of a flask forming a mixing vessel;
adding (520) a second consumable substance into the internal chamber, the flask comprising an outer wall, the internal chamber being located within the outer wall, and a heat sleeve or a cavity between the internal chamber and the outer wall to thermally insulate the internal chamber;
securing (530) a removable lid to the mixing vessel, the removable lid comprising a sealing member to seal the internal chamber, including setting the sealing member to a first stable spatial configuration;
mixing (540) the first and second consumable substances within the internal chamber by shaking the mixing vessel, wherein said mixing generates a pressure within the internal chamber and application of said pressure to the sealing member causes the sealing member to transition to a second stable spatial configuration that increases a volume of the mixing vessel, wherein the sealing member is configured to remain in the second stable spatial configuration until a force is applied to an external surface of the removable lid;
wherein at least one of the first and second consumable substances comprises a liquid with a temperature greater than an ambient air temperature within the internal chamber, and wherein the method further comprises the step of:
accessing (550) the mixed consumable substances with the sealing member in the second stable spatial configuration,
wherein the mixing vessel is reset for further use by applying the force to the external surface of the removable lid.

9. The method (500) of any one of claim 8, wherein the first consumable substance comprises a cacao-based solid.

10. The method (500) of any one of claims 8 to 9, wherein mixing (540) the first and second consumable substances comprises emulsifying the first and second consumable substances by applying shear forces to the first and second consumable substances.

11. A method (600) of manufacturing the mixing vessel of any one of claims 1 to 7, comprising:
moulding (610) the internal chamber of the mixing vessel;
forming (630) the removable lid of the mixing vessel by moulding the sealing member over a casing for the removable lid.

12. The method (600) of claim 11, comprising injection moulding a conical frustum having an inner wall for the internal chamber and the outer wall, wherein a space between the inner wall and the outer wall comprises an insulating cavity of the mixing vessel.

13. The method (600) of any one of claims 11 to 12, comprising forming a button to transition between the two stable spatial configurations.

14. The method (600) of any one of claims 11 to 13, wherein the internal chamber comprises polycarbonate, wherein the sealing member comprises one of: a thermoplastic elastomer and a silicone, and wherein the casing for the removable lid comprises polypropylene.

15. The method (600) of any one of claims 8 to 10, wherein the flask is constructed from one of:
moulded polycarbonate;
formed glass; and
ceramic materials.

## Patentansprüche

1. Mischbehälter (100) für Verbrauchsstoffe, umfassend:
einen Kolben, umfassend:
Eine interne Kammer (120) zum Aufnehmen von Verbrauchssubstanzen zum Mischen, mindestens einer Verbrauchssubstanz, die eine Flüssigkeit umfasst, wobei die interne Kammer (120) konfiguriert ist, um einen Verbrauchsstoff mit einer Temperatur aufzunehmen, die größer als eine Umgebungslufttemperatur innerhalb der internen Kammer (120) ist,
eine Außenwand, wobei sich die interne Kammer innerhalb der Außenwand befindet, und
eine Wärmehülse oder einen Hohlraum zwischen der internen Kammer und der äußeren Wand, um die interne Kammer thermisch zu isolieren, und
einen abnehmbaren Deckel,
wobei der abnehmbare Deckel ein Dichtungselement (130) umfasst, um die interne Kammer (120) abzudichten, wobei das Dichtungselement mindestens eine erste stabile räumliche Konfiguration (130-A) und eine zweite stabile räumliche Konfiguration (130-B) aufweist, um ein Volumen der inneren Kammer (120) zu verändern, und
wobei das Dichtungselement (130) des abnehmbaren Deckels so angeordnet ist, dass es bei Aufbringen eines Drucks, der während des Mischens in der internen Kammer (120) erzeugt wird, zwischen der ersten und der zweiten stabilen räumlichen Konfiguration übergeht, um das Volumen der internen Kammer (130) zu vergrößern,
wobei die erste und die zweite stabile räumliche Konfiguration in dem Sinne stabil sind, dass das Dichtungselement (130) so konstruiert ist, dass es in der jeweiligen ersten und zweiten stabilen räumlichen Konfiguration verbleibt, bis eine externe Kraft ausgeübt wird, und
wobei das Dichtungselement (130) angeordnet ist, um die zweite stabile räumliche Konfiguration (130-B) aufrechtzuerhalten, bis eine externe Kraft auf das Dichtungselement (130) ausgeübt wird, wobei die externe Kraft auf eine externe Oberfläche des abnehmbaren Deckels aufgebracht wird.

2. Mischbehälter (100) nach Anspruch 1, wobei das Dichtungselement (130) eine Membran (250) mit mindestens zwei Verformungszuständen umfasst, die den mindestens zwei stabilen räumlichen Konfigurationen entsprechen.

3. Mischbehälter (100) nach Anspruch 2, wobei die mindestens zwei Verformungszustände eine nicht erweiterte räumliche Konfiguration und eine erweiterte räumliche Konfiguration umfassen, wobei die erweiterte räumliche Konfiguration das Volumen der internen Kammer vergrößert, wobei das Dichtungselement (130) eine Schaltfläche umfasst, wobei diese Schaltfläche drückbar ist, um einen Übergang zwischen der erweiterten räumlichen Konfiguration und der nicht erweiterten räumlichen Konfiguration zu ermöglichen.

4. Mischbehälter (100) nach einem der Ansprüche 2 bis 3, wobei die Membran (250) ein Elastomer umfasst.

5. Mischbehälter (100) nach einem der Ansprüche 2 bis 4, wobei ein ringförmiger Abschnitt der Membran (250) eine Dichtung zwischen einem oberen ringförmigen Rand der internen Kammer (120) und einem Gehäuse des Dichtungselements (130) bildet.

6. Mischbehälter (100) nach einem der Ansprüche 2 bis 5, wobei der Kolben konstruiert ist aus einem von Folgendem:
formgegossenes Polycarbonat;
geformtes Glas; und
keramische Materialien.

7. Mischbehälter (100) nach einem der Ansprüche 1 bis 6, wobei der Kolben (205) und der abnehmbare Deckel jeweilige Teile eines Bajonettbefestigungsmechanismus umfassen, um den entfernbaren Deckel an dem Kolben zu befestigen und die interne Kammer (120) abzudichten.

8. Verfahren (500) zum Mischen von Verbrauchssubstanzen, umfassend:
Hinzufügen (510) einer ersten Verbrauchssubstanz in eine interne Kammer eines Kolbens, der einen Mischbehälter bildet;
Hinzufügen (520) einer zweiten Verbrauchssubstanz in die interne Kammer, wobei der Kolben eine Außenwand, die interne Kammer, die sich innerhalb der Außenwand befindet, und eine Wärmehülse oder einen Hohlraum zwischen der internen Kammer und der Außenwand zur thermischen Isolierung der internen Kammer umfasst;
Befestigen (530) eines abnehmbaren Deckels an dem Mischbehälter, wobei der abnehmbare Deckel ein Dichtungselement umfasst, um die interne Kammer abzudichten, einschließlich der Einstellung des Dichtungselements in eine erste stabile räumliche Konfiguration;
Mischen (540) der ersten und der zweiten Verbrauchssubstanz innerhalb der internen Kammer durch Schütteln des Mischbehälters, wobei das Mischen einen Druck innerhalb der internen Kammer erzeugt, und das Aufbringen des Drucks auf das Dichtungselement bewirkt, dass das Dichtungselement in eine zweite stabile räumliche Konfiguration übergeht, die das Volumen des Mischbehälters vergrößert, wobei das Dichtungselement konfiguriert ist, um in der zweiten stabilen räumlichen Konfiguration zu verbleiben, bis eine Kraft auf eine externe Oberfläche des abnehmbaren Deckels aufgebracht wird,
wobei mindestens eine der ersten und zweiten Verbrauchssubstanzen eine Flüssigkeit mit einer Temperatur umfasst, die größer als eine Umgebungslufttemperatur innerhalb der internen Kammer ist, und wobei das Verfahren ferner den folgenden Schritt umfasst:
Zugreifen (550) auf die gemischten Verbrauchssubstanzen mit dem Dichtungselement in der zweiten stabilen räumlichen Konfiguration,
wobei der Mischbehälter für den weiteren Gebrauch zurückgesetzt wird, indem Kraft auf die externe Oberfläche des abnehmbaren Deckels aufgebracht wird.

9. Verfahren (500) nach einem der Ansprüche 8, wobei die erste der Verbrauchssubstanzen einen Feststoff auf Kakaobasis umfasst.

10. Verfahren (500) nach einem der Ansprüche 8 bis 9, wobei das Mischen (540) der ersten und der zweiten Verbrauchssubstanz das Emulgieren der ersten und der zweiten Verbrauchssubstanz durch Aufbringen von Scherkräften auf die erste und die zweite Verbrauchssubstanz umfasst.

11. Verfahren (600) zum Herstellen des Mischbehälters nach einem der Ansprüche 1 bis 7, umfassend:
Formgießen (610) der internen Kammer des Mischbehälters;
Formen (630) des abnehmbaren Deckels des Mischbehälters durch Formgießen des Dichtungselements über ein Gehäuse für den abnehmbaren Deckel.

12. Verfahren (600) nach Anspruch 11, umfassend das Spritzgießen eines konischen Kegelstumpfes mit einer Innenwand für die interne Kammer und der Außenwand, wobei ein Raum zwischen der Innenwand und der Außenwand einen isolierenden Hohlraum des Mischbehälters umfasst.

13. Verfahren (600) nach einem der Ansprüche 11 bis 12, umfassend die Bildung einer Schaltfläche zum Übergang zwischen den beiden stabilen räumlichen Konfigurationen.

14. Verfahren (600) nach einem der Ansprüche 11 bis 13, wobei die interne Kammer Polycarbonat umfasst, wobei das Dichtungselement eines von Folgendem umfasst: ein thermoplastisches Elastomer und ein Silikon, und wobei das Gehäuse für den abnehmbaren Deckel Polypropylen umfasst.

15. Verfahren (600) nach einem der Ansprüche 8 bis 10, wobei der Kolben aus einem von Folgendem konstruiert ist:
formgegossenes Polycarbonat;
geformtes Glas; und
keramische Materialien.

## Revendications

1. Récipient de mélange (100) pour des liquides consommables, comprenant :
un flacon comprenant :
une chambre interne (120) destinée à recevoir des substances consommables pour mélange, au moins une substance consommable comprenant un liquide, la chambre interne (120) étant conçue pour recevoir un liquide consommable avec une température supérieure à une température d'air ambiant au sein de la chambre interne (120),
une paroi externe, la chambre interne étant localisée au sein de la paroi externe, et
un manchon thermique, ou une cavité entre la chambre interne et la paroi externe pour isoler thermiquement la chambre interne ; et
un couvercle amovible,
dans lequel le couvercle amovible comprend un élément d'étanchéité (130) pour étanchéifier la chambre interne (120), l'élément d'étanchéité ayant au moins une première configuration spatiale stable (130-A) et une seconde configuration spatiale stable (130-B) pour changer un volume de la chambre interne (120), et
dans lequel l'élément d'étanchéité (130) du couvercle amovible est agencé pour effectuer une transition entre les première et seconde configurations spatiales stables lors de l'application d'une pression générée au sein de la chambre interne (120) pendant un mélange pour augmenter le volume de la chambre interne (130),
dans lequel les première et seconde configurations spatiales stables sont stables dans le sens où l'élément d'étanchéité (130) est construit de façon à rester dans les première et seconde configurations spatiales stables respectives jusqu'à ce qu'une force externe soit appliquée,
dans lequel, l'élément d'étanchéité (130) est agencé pour maintenir la seconde configuration spatiale stable (130-B) jusqu'à ce qu'une force externe soit appliquée à l'élément d'étanchéité (130), la force externe étant appliquée à une surface externe du couvercle amovible.

2. Récipient de mélange (100) selon la revendication 1, dans lequel l'élément d'étanchéité (130) comprend un diaphragme (250) avec au moins deux états de déformation correspondant aux au moins deux configurations spatiales stables.

3. Récipient de mélange (100) selon la revendication 2, dans lequel les au moins deux états de déformation comprennent une configuration spatiale non étendue et une configuration spatiale étendue, la configuration spatiale étendue augmentant le volume de la chambre interne, dans lequel l'élément d'étanchéité (130) comprend un bouton, le bouton pouvant être pressé pour permettre une transition entre la configuration spatiale étendue et la configuration spatiale non étendue.

4. Récipient de mélange (100) selon l'une quelconque des revendications 2 à 3, dans lequel le diaphragme (250) comprend un élastomère.

5. Récipient de mélange (100) selon l'une quelconque des revendications 2 à 4, dans lequel une partie annulaire du diaphragme (250) forme un joint statique entre un bord annulaire supérieur de la chambre interne (120) et une enveloppe de l'élément d'étanchéité (130).

6. Récipient de mélange (100) selon l'une quelconque des revendications 2 à 5, dans lequel le flacon est construit à partir de l'un parmi :
du polycarbonate moulé ;
du verre formé ; et
des matériaux céramiques.

7. Récipient de mélange (100) selon l'une quelconque des revendications 1 à 6, dans lequel le flacon (205) et le couvercle amovible comprennent des parties respectives d'un mécanisme de fixation à baïonnette pour fixer le couvercle amovible au flacon et étanchéifier la chambre interne (120).

8. Procédé (500) de mélange de substances consommables, comprenant :
l'ajout (510) d'une première substance consommable dans une chambre interne d'un flacon formant un récipient de mélange ;
l'ajout (520) d'une seconde substance consommable dans la chambre interne, le flacon comprenant une paroi externe, la chambre interne étant localisée au sein de la paroi externe, et un manchon thermique ou une cavité entre la chambre interne et la paroi externe pour isoler thermiquement la chambre interne ;
la fixation (530) d'un couvercle amovible au récipient de mélange, le couvercle amovible comprenant un élément d'étanchéité pour étanchéifier la chambre interne, comportant le réglage de l'élément d'étanchéité dans une première configuration spatiale stable ;
le mélange (540) des première et seconde substances consommables au sein de la chambre interne en secouant le récipient de mélange, ledit mélange générant une pression au sein de la chambre interne et l'application de ladite pression à l'élément d'étanchéité amenant l'élément d'étanchéité à effectuer une transition vers une seconde configuration spatiale stable qui augmente un volume du récipient de mélange, dans lequel l'élément d'étanchéité est conçu pour rester dans la seconde configuration spatiale stable jusqu'à ce qu'une force soit appliquée à une surface externe du couvercle amovible ;
dans lequel au moins l'une des première et seconde substances consommables comprend un liquide avec une température supérieure à une température d'air ambiant au sein de la chambre interne, et le procédé comprenant en outre l'étape consistant à :
accéder (550) aux substances consommables mélangées avec l'élément d'étanchéité dans la seconde configuration spatiale stable,
dans lequel le récipient de mélange est restauré pour une utilisation ultérieure en appliquant la force à la surface externe du couvercle amovible.

9. Procédé (500) selon l'une quelconque parmi la revendication 8, dans lequel la première substance consommable comprend un solide à base de cacao.

10. Procédé (500) selon l'une quelconque des revendications 8 à 9, dans lequel le mélange (540) des première et seconde substances consommables comprend l'émulsionnement des première et seconde substances consommables en appliquant des forces de cisaillement aux première et seconde substances consommables.

11. Procédé (600) de fabrication du récipient de mélange selon l'une quelconque des revendications 1 à 7, comprenant :
le moulage (610) de la chambre interne du récipient de mélange ;
la formation (630) du couvercle amovible du récipient de mélange en moulant l'élément d'étanchéité par-dessus une enveloppe pour le couvercle amovible.

12. Procédé (600) selon la revendication 11, comprenant le moulage par injection d'un tronc conique ayant une paroi interne pour la chambre interne et la paroi externe, dans lequel un espace entre la paroi interne et la paroi externe comprend une cavité isolante du récipient de mélange.

13. Procédé (600) selon l'une quelconque des revendications 11 à 12, comprenant la formation d'un bouton pour effectuer une transition entre les deux configurations spatiales stables.

14. Procédé (600) selon l'une quelconque des revendications 11 à 13, dans lequel la chambre interne comprend du polycarbonate, dans lequel l'élément d'étanchéité comprend l'un parmi : un élastomère thermoplastique et une silicone, et dans lequel l'enveloppe pour le couvercle amovible comprend du polypropylène.

15. Procédé (600) selon l'une quelconque des revendications 8 à 10, dans lequel le flacon est construit à partir de l'un parmi :
du polycarbonate moulé ;
du verre formé ; et
des matériaux céramiques.
